# EUROPÄISCHE PATENTSCHRIFT

(11) **EP 1 124 776 B1**
(45) Veröffentlichungstag und Bekanntmachung des Hinweises auf die Patenterteilung: **15.01.2003**
(21) Anmeldenummer: 99970652.6
(22) Anmeldetag: 02.10.1999
(51) Int. Cl.: C05F 5/00, C05F 11/08

(54) **MYKORRHIZAPILZART ENTHALTENDES DÜNGEMITTEL FÜR PFLANZEN, DAS IN KÖRNIGER FORM VORLIEGT**
GRANULAR FERTILIZER FOR PLANTS CONTAINING A TYPE OF MYCORRHIZAL FUNGUS
ENGRAIS POUR PLANTES SOUS FORME DE GRAINS, CONTENANT UNE ESPECE DE CHAMPIGNON MYCORHIZIEN

(30) Priorität: 20.10.1998 DE 19848337
(43) Veröffentlichungstag der Anmeldung: 22.08.2001
(73) Patentinhaber: Maltaflor Düngergesellschaft MBH, 56626 Andernach (DE)
(72) Erfinder: PROTZMANN, Mario, D-56626 Andernach (DE); BÖCKEM, Harald, D-51109 Köln (DE)
(74) Vertreter: Bauer, Wulf, Dr.
(86) Internationale Anmeldenummer: DE9903188
(87) Internationale Veröffentlichungsnummer: WO00023399

(56) Entgegenhaltungen:
- EP-A- 0 286 351
- EP-A- 0 654 211
- DE-A- 4 424 574
- DE-A- 4 426 851
- FR-A- 2 658 184
- US-A- 4 337 077
- US-A- 4 534 781
- US-A- 5 786 188

## Beschreibung

Die Erfindung bezieht sich auf ein Düngemittel nach dem Oberbegriff des Patentanspruchs 1.

Ein derartiges Düngemittel ist beispielsweise aus der DE 44 24 574 A1 bekannt. Dieses vorbekannte Düngemittel verwendet Malzkeime, wie sie bei der Vermälzung von Braugetreide anfallen und nach dem Darren vom Malzkorn abgetrennt werden. Es liegt in einer körnigen Form vor, wie sie für das Ausbringen gut geeignet ist. Typischerweise passen die Körner durch Sieböffnungen mit quadratischen oder runden Durchlässen, bei denen die Seitenlänge bzw. der Durchmesser zwischen 3 und 5 mm liegt. Größere und kleinere Siebweiten sind dadurch nicht ausgeschlossen.

Das Düngemittel der eingangs genannten Art hat sich grundsätzlich sehr bewährt. So stellt man beispielsweise eine deutlich höhere Wurzelmasse fest im Vergleich zu anderen Düngemitteln.

Unter Düngemitteln werden grundsätzlich Pflanzennährstoffe aller Art bezeichnet. Üblicherweise hat ein Düngemittel einen Gehalt an Stickstoff, an Phosphor und an Kalium. Diese Bestandteile müssen jedoch nicht zwangsweise und insbesondere nicht in der jeweils von nationalen Vorschriften für die Mindestanforderungen an ein Düngemittel vorgeschriebenen Höhe erfüllt sein.

Die Erfindung hat sich die Aufgabe gestelltdas Düngemittel der eingangs genannten Art dahin gehen weiter zu entwickeln, dass zusätzliche Wirkstoffe beigefügt werden, die nicht die Pflanze ernähren, sondern mit den Wurzeln einer höheren Pflanze bei wechselseitigem Stoffaustausch eine Verbindung eingehen.

Diese Aufgabe wird gelöst durch ein Düngemittel mit den Merkmalen des Patentanspruchs 1.

Unter Mykorrhiza wird die Verbindung eines Pilzes mit den Wurzeln einer höheren Pflanze verstanden, dabei kommt es zu einer Symbiose. Eine solche Mykorrhiza-Symbiose zwischen den Wurzeln höherer Pflanzen und Pilzhyphen dient nicht nur der verbesserten Wasser- und Mineralstoffaufnahme, sondern der Pilz ist zudem in der Lage, durch Ausscheidung antibiotisch wirksamer Substanzen die Pflanze vor schädlichen Organismen zu schützen.

Man unterscheidet zwischen zwei Formen der Mykorrhiza:

Zum einen die endotrophen Mykorrhiza, kurz Endomykorrhiza genannt. Die Pilzhyphen wachsen bei dieser Mykorrhizaform in die Zellen der Pflanzenwurzeln hinein. Geeignet ist diese Mykorrhizaform insbesondere für landwirtschaftliche Nutzpflanzen.

Zum anderen die ektotrophe Mykorrhiza, oder kurz Ektomykorrhiza genannt. Sie dominiert bei Bäumen der gemäßigten Zonen. Bei dieser Form der Mykorrhiza wächst der Pilz in die Wurzeln der Wirtspflanze und die Hyphen dringen zwischen die äußeren Rindenzellen. Dabei bildet sie eine typische, labyrinthartige Struktur. Auf der Oberfläche der Wurzeln bildet der Pilz den Hyphenmantel, der ebenfalls eine typische Struktur der Ektomykorrhiza darstellt. Der Hyphenmantel ist ein mechanischer Schutz der Wurzelspitzen, er bewirkt die Abkapselung der Wurzel vom Boden und schützt dadurch vor eindringenden Pathogenen. Er dient ferner als Speicherorgan für Kalzium, Kalium, Kohlehydrate, Phosphate und Stickstoffverbindungen.

Mykorrhizierte Wurzeln erlangen durch das Myzel des Pilzes Zugang zu einem größeren Bodenvolumen, als nicht infizierte. Die für die Nährstoffaufnahme aktive Oberfläche wird stark vergrößert. Durch den Pilz kann die Pflanze selbst bei vermindertem Bodenwasserpotential organische als auch anorganische Stickstoffquellen besser nutzen. Auf dieses Nährstoffreservoir haben dann sowohl der Pilz als auch die Pflanze Zugriff.

Eine unmittelbare Kombination bzw. Vermischung von Düngemitteln mit Sporen und/oder Myzel von Mykorrhiza ist bisher nicht bekannt. Bekannt ist es, Myzelien der in Frage kommenden Pilzarten als vegetatives Inokulum auf verschiedenen porösen Materialien, beispielsweise Blähton, unter sterilen Bedingungen anzuziehen. Bei der Ausbringung des vegetativen Inokulums muß das Überleben des Impfmaterials bis zur Ausbildung von Wurzeln durch die Pflanze gewährleistet werden. Sterilität des Substrates bis zur Wurzelbildung zu erhalten ist schwierig und im Freiland nicht möglich. Als Energiequelle für den Pilz bis zur Ausbildung der Mykorrhiza sind Zucker im unsterilen Substrat nur bedingt geeignet, da bodenbürtige Antagonisten die Energiequellen ausbeuten und das Überleben des Inokulums bis zur Wurzelbildung gefährden.

Zum anderen ist es bekannt, Sporen unmittelbar als Pulver oder Pellets in Substrate einzumischen oder als Suspension gesprüht auf eine Substratoberfläche aufzubringen. Bei den meisten für Mykorrhiza geeigneten Pilzarten ist diese Methode nicht anwendbar, da sie zu wenig Sporen bilden.

Die Einmischung des Mykorrhiza-Inokulums ins Substrat erfolgte bisher zu unterschiedlichen Zeitpunkten:

Zum einen wird eine Substrateinmischung zum Zeitpunkt der Saat durchgeführt, dies hat den Vorteil, keinen zusätzlichen Arbeitsgang erforderlich zu machen. Pilz und Pflanze haben dabei den Vorteil der Symbiose von der ersten Stunde an. Dies eignet sich speziell für die Sporenmethode.

Zum anderen erfolgt ein Einmischen später, z.B. durch Impfung mit vegetativem Myzel. Dabei ergeben sich die bereits erwähnten Nachteile. Es ist bekannt, dass Inokulum beim Umpflanzen oder erst nach der Wurzelentwicklung ins Substrat einzubringen. Dabei ist aber ein zusätzlicher Arbeitsgang erforderlich, bei dem die Pflanzen zudem in ihrer Entwicklung gestört werden.

Die bisher vorhandenen Technologien sind nicht praktikabel genug.

Bei dem erfindungsgemäßen Düngemittel sind Mykorrhizapilz-Sporen und/oder vegetatives Myzel im Düngemittel enthalten. Die Pilze sind dabei Endo- oder Ektomykorrhizapilze. Beispiele für Ektomykorrhiza sind pisolitus tinktorius (arhizus), sclerotinia ranzium, paxfillus involutus, lactarius ssp., tuber, boletus edulis, xerocomus badius, hebeloma ssp., Laccarina laccarata, Laccarina lametistina, soilus ssp.. Beispiele für Endomykorrhiza sind glomus ssp., rhizoctonia, endogane, acaulospora, gigaspora, sclerocystis.

Die Vorteile des erfindungsgemäßen Verfahrens liegen im folgenden:

Der erfindungsgemäße Dünger ist im Bereich des Gartenbaus, von Baumschulen, Landwirtschaft und Hobby bequem handhabbar.

Der eigentliche Dünger und der Mykorrhizapilz werden gemeinsam mit einem einzigen Arbeitsgang aufgebracht.

Der Pilz hat in der schwierigen Anlaufphase bis zur Wurzelentwicklung der Pflanze die Fähigkeit, durch bereits im Dünger vorhandene Nährelemente zu wachsen.

Das Substrat wird bereits vor der Wurzelentwicklung vom Pilz durchwachsen und es wird von der ersten Stunde an Mykorrhiza etabliert.

Insgesamt ist durch diese Vorteile auch der Einsatz im Freiland in unsterilen Substraten erfolgreich möglich.

In einer besonders bevorzugten Weiterentwicklung weist das erfindungsgemäße Düngemittel Kohlehydrate, vorzugsweise in mindestens 3, vorzugsweise in mindestens 10 % Gewichtsanteilen auf. Die Kohlehydrate liegen insbesondere als Stärke und/oder Zucker vor. Besonders bevorzugt wird als Zukker Maltose, wie sie z.B. von den Malzkeimen geliefert wird. Ansonsten kommen als Stärke insbesondere Getreide- und Kartoffelstärke, z.B. Amylose und Amylopektin, als Zucker z.B. Glucose, Fructose, Saccharose oder Raffinose in Betracht.

In einer bevorzugten Ausbildung hat das Düngemittel mindestens 50 Gewichtsprozent Malzkeime, wie sie bei der Vermälzung von Braugetreide anfallen und nach dem Dorren vom Malzkorn abgetrennt werden. Höhere Anteile an Malzkeimen, z.B. 60, 70 oder 80 Gewichts-%, bis hin zu 100 % sind vorteilhaft.

Bei einem derartigen Düngemittel, das erhebliche Anteile von Malzkeimen enthält, konnte nachgewiesen werden, dass das Wurzelwachstum stark stimuliert wird. In Kombination mit Mykorrhizapilz Inokulum wird somit die Grundlage für vermehrte Pilz-Pflanzenkontakte, also Mykorrhizenbildung, geschaffen. Durch den hohen Gehalt an Kohlehydraten, die eine wichtige Nährstoffquelle für die Mykorrhiza darstellen, ist die Energieversorgung der Mykorrhiza bis zur Symbiose abgesichert. Durch die Granulierung werden alle Nährstoffe in der am Mykorrhiza reichsten Zone angeboten, was einen Wettbewerbsvorteil gegenüber Antagonisten bzw. Schadpilzen darstellt. Malzkeime enthalten zudem nennenswerte Mengen an Hefepilzen. Diese sind der Mykorrhizierung förderlich. Die Langzeitdüngereigenschaft von Düngemitteln, die im wesentlichen Malzkeime enthalten, kommt der Entwicklung von Mykorrhiza und Pflanze entgegen, da die Ernährung beider Organismen bis zur Symbiose und auch darüber hinaus gewährleistet ist.

Prinzipiell ist aber auch jeder andere Dünger als Trägersubstanz geeignet. Die Kombination von leistungsstarken Mykorrhizapilzarten und -herkünften ist problemlos durch Einmischen in eigentliches Düngermaterial möglich.

Vorzugsweise enthält das erfindungsgemäße Düngemittel mindestens 5 Gewichtsprozent, vorzugsweise mindestens 10 und insbesondere mindestens 20 Gewichtsprozent an Sporen mindestens einer Mykorrhizapilzart pro Tonne Fertigprodukt.

Das erfindungsgemäße Düngemittel ermöglicht eine Kombination von günstigen Eigenschaften der Pflanzenernährung und dem Vermögen leistungsfähiger Symbiosen zwischen Pflanze und Mikroorganismus, dies führt zu ertragsstarken Pflanzen auch auf Extrem- und Problemstandorten. Damit ist ein entscheidender Beitrag zum Erosionsschutz und zur Erhaltung der Bodenfruchtbarkeit möglich.

Malzkeime in reiner Form haben einen Nährstoffgehalt von typischerweise 5,6 % Stickstoff, 3,3 % Phosphat und 3,2 % K₂O alle Angaben in Gewichtsprozent. Aufgrund dieser Nährstoffgehalte eignen sich Malzkeime gut als Düngemittel. Malzkeime bestehen aus physiologisch jungem, leicht mineralisierbarem Gewebe und gewährleisten eine gute, etwa eine Vegetationsperiode anhaltende Düngewirkung. Bei dem Dünger aus Malzkeimen handelt es sich um einen Dünger, der auf der Basis rein pflanzlicher, organischer Stoffe hergestellt ist. In soweit eignen sich Malzkeime gut als Düngemittel. Versuchsergebnisse belegen eine gute Düngewirkung der Malzkeime.

Vorzugsweise besteht das Düngemittel überwiegend, also zu mindest 50 % aus Malzkeimen. Als weitere, günstige und die Düngewirkung positiv beeinflussende Beimengungen haben sich Gersten- und/oder Malzstäube erwiesen, wie sie beim z. B. Vermälzen anfallen. Auf diese Weise kann auch für die Stäube, die zwangsläufig beim Vermälzen anfallen, eine sinnvolle Verwendung angegeben werden. In einer vorzugsweisen Weiterbildung enthält das Düngemittel somit Getreide- und/oder Malzstäube in einem Verhältnis von Malzkeimen zu Stäuben im Bereich von 2/3 zu 1/3 bis 3/4 zu 1/4.

Die Getreide- und/oder Malzstäube haben einen großen Anteil an niederpolymeren Kohlenhydraten und Zucker, diese wiederum begünstigen die Nährstoffmineralisation, weil Kohlehydrate und Zucker als Nährmedium für die Mikroorganismen dienen können, die die Nährstoffmineralisation begünstigen. Die Mischung von Malzkeimen und Stäuben hat typischerweise eine Nährstoffzusammensetzung von etwa 3,5 % Stickstoff, 2,2 % Phosphat und 2,1 % K₂O, wiederum alle Angaben in Gewichtsprozent.

Bei der praktischen Verwendung hat sich dabei eine Korngröße zwischen 10 mal 30 mm und 3 mal 5 mm als besonders günstig erwiesen. Durch die Ausbildung von Körnern und durch die angegebenen Korngrößen ist das erfindungsgemäße Düngemittel gut anwendbar, läßt sich mit Streugeräten oder auch per Hand gut ausbringen und somit insgesamt gut dosieren. Als bevorzugt haben sich Korngrößen im unteren Bereich, also in Nähe von 3 mal 5 mm, erwiesen. Bei ihnen ist die Handhabung besonders günstig.

Um die Mischung aus Malzkeime und Pilzmaterial einschließlich der eventuell zugegebenen Gersten- und Malzstäube pelletisieren und granulieren zu können, muß dem Pressgut Feuchtigkeit zugegeben werden. Der Trockensubstanzgehalt der Malzkeime, mit oder ohne die Stäube, beträgt typischerweise 94 %. Für das Pelletisieren bzw. Granulieren ist ein Anfeuchten auf 85 bis 90 % Trockensubstanz geeignet und notwendig. Das Anfeuchten erfolgt durch Zugabe einer wässrigen Flüssigkeit. Diese kann ausschließlich aus Wasser bestehen, insbesondere und vorzugsweise kann sie aber zusätzliche Düngestoffe enthalten. Mit dem Wasserstrom können somit Nährstoffe wie beispielsweise Phosphor, Kalium, Magnesium oder auch Mikronährstoffe, wie z. B. Kupfer zugeführt werden. Andererseits kann der Wasserstrom aber auch durch bereits auf dem Markt befindliche Flüssigdüngemittel ersetzt werden. Mit der Zugabe von Nährstoffen über und in der wässrigen Flüssigkeit kann das Nährstoffverhältnis des fertigen Düngemittels beliebig beeinflußt werden, so daß eine Anpassung an die spezifischen Ansprüche einer zu düngenden Pflanzenart gegeben ist. Auf diese Weise kann ein spezielles Düngemittel für Blühpflanzen, für Koniferen, für Gemüse, Erdbeeren und dergleichen hergestellt werden.

Die Erfindung wird im folgenden anhand eines Ausführungsbeispiels erläutert:

Beim Vermälzen von Braugetreide, also insbesondere von Braugerste oder Weizen, bilden sich Keimwurzeln aus, üblicherweise bildet ein Korn 3 - 5 Keimwurzeln mit einer Länge von etwa 10 bis 14 mm und einem Durchmesser von etwa 0,4 bis 0,7 mm aus. Beim Darren wird das Korn einschließlich seiner Keimwurzel getrocknet. Anschließend kann die Keimwurzel abgetrennt werden, sofern sie nicht schon durch mechanische Behandlung zuvor abgetrennt wurde. Die Malzkeime sollen sich nicht im fertigen Malz, wie es für die Bierherstellung benötigt wird, befinden, weil sie den Brauprozess negativ beeinflussen.

Beim gesamten Vermälzungsprozeß fallen auch Stäube an. In den ersten Schritten des Vermälzungsprozesses fallen reine Getreidestäube, also insbesonder Gerstenstäube an, bei den späteren Verfahrenschritten fallen Malzstäube an. Zur Herstellung des erfindungsgemäßen Düngemittels werden die pro eingesetzter Ausgangsmenge an Braugetreide anfallenden Malzkeime und Stäube miteinander vermischt. In einer konkreten Realisierung liegt das Mischverhältnis bei 70 % Malzkeimen und 30 % Stäuben. Pro Tonne Düngemittel, also z.B. des o.g. Mischungsverhältnisses, werden 20 g Sporen einer Mykorrhizaform zugemischt, dieses Gemisch wird nun wie folgt weiterbehandelt:

Um das Gemisch aus Malzkeimen, Pilzmaterial und Stäuben in eine körnige Form überführen zu können, muß das Pressgut angefeuchtet werden. Der Trockensubstanzgehalt liegt typischerweise zwischen 92 und 96 %. Die Anfeuchtung durch Zugabe einer wässrigen Flüssigkeit erfolgt dergestalt, daß beispielsweise 12 Gewichtsprozent Wasser im Gemisch aus den Malzkeimen und Stäuben enthalten ist.

In einer speziellen Ausbildung wird als wässrige Zugabe ein Flüssigdüngemittel verwendet, wie es bereits auf dem Markt erhältlich ist. Zusätzlich wird in geringem Maße Kupfer zugeführt. In einer ansich bekannten Vorrichtung zum Pelletisieren oder Granulieren wird die Mischung körnig gemacht. Sie kann dann in handelsüblichen Mengen verpackt und zum Verkauf gegeben werden.

Die maximale Ausbringmenge pro qm liegt bei etwa 1,5 kg. In den meisten Fällen ist eine Ausbringmenge von etwas unter 1 kg ausreichend.

Die genannte Offenbarung der DE 44 24 574 A1 gehört auch zum Offenbarungsgehalt der vorliegenden Anmeldung.

## Patentansprüche

1. Düngemittel für höhere Pflanzen, das in körniger Form vorliegt, wobei das Düngemittel zumindest 50 Gewichtsprozent an Malzkeimen, wie sie bei der Vermälzung von Braugetreide anfallen und vom Malzkorn abgetrennt werden, enthält, vorzugsweise dass das Düngemittel im wesentlichen durch derartige Malzkeime gebildet ist, **dadurch gekennzeichnet, dass** in den Körnern pro Tonne mindestens 10 g Mykorrhizasporen, vorzugsweise mindestens 25 g Mykorrhizasporen und/oder mindestens 5 Gewichtsprozent Mycel, vorzugsweise mindestens 15 Gewichtsprozent Mycel mindestens einer Mykorrhizapilzart enthalten ist.

2. Düngemittel nach Anspruch 1, **dadurch gekennzeichnet, dass** die Körner im Mittel 2 bis 8 mm Korndurchmesser, insbesondere 3 bis 5 mm Korndurchmesser aufweisen.

3. Düngemittel nach Anspruch 1, **dadurch gekennzeichnet, dass** es Kohlehydrate, die vorzugsweise mindestens 3 Gewichtsprozent ausmachen, aufweist, insbesondere dass als Kohlehydrate Stärke und/oder Zucker enthalten ist.

4. Düngemittel nach Anspruch 3, **dadurch gekennzeichnet, dass** als Kohlehydrat Maltose im Düngemittel enthalten ist.

5. Düngemittel nach Anspruch 1, **dadurch gekennzeichnet, dass** es weiterhin Gersten- und/oder Malzstäube enthält, wie diese insbesondere beim Vermälzen anfallen, wobei vorzugsweise das Verhältnis von Malzkeimen zu Stäuben 2/3 zu 1/3 bis 3/4 zu 1/4 beträgt.

6. Verfahren zur Herstellung eines Düngemittels nach Anspruch 1, **dadurch gekennzeichnet, dass** zum Herstellen der Körner ein Granulieren bzw. Pelletisieren durchgeführt wird, wobei eine Flüssigkeit zugegeben wird.

7. Verfahren zur Herstellung eines Düngemittels nach Anspruch 6, **dadurch gekennzeichnet, dass** die Flüssigkeit Nährstoffe enthält, z.B. Flüssigdüngemittel, Phosphor, Kalium, Magnesium oder Mikronährstoffe, wie z.B. Kupfer.

## Claims

1. Fertilizer grains for higher plants, which fertilizer grains contain at least 50 percent by weight malt germs, as they are produced in the process of malting ale cereals and removed from the malt grain, preferably wherein the fertilizer is substantially made of such malt germs, **characterized in that** the fertilizer grains contain per ton a quantity of at least 10 g mycorrhizal spores, preferably at least 25 g mycorrhizal spores and/or at least 5 percent by weight mycelium, preferably at least 15 percent of at least one type of a mycorrhizal fungus.

2. Fertilizer grains according to claim 1, wherein the mean diameter of the grains is between 2 and 8 mm, more specifically between 3 and 5 mm.

3. Fertilizer grains according to claim 1, wherein the fertilizer grains are provided with carbohydrates in a share of preferably at least 3 percent by weight, more specifically wherein the carbohydrates contained are starch and/or sugar.

4. Fertilizer grains according to claim 3, wherein the carbohydrate contained in the fertilizer grains is maltose.

5. Fertilizer grains according to claim 1, wherein the fertilizer grains furthermore contain barley dusts and/or malt dusts as they are particularly obtained in the process of malting, the ratio of malt germs to dusts preferably amounting to between 2/3 to 1/3 and 3/4 to 1/4.

6. Fertilizer grains according to claim 1, wherein granulating or pelletizing is carried out in order to produce the grains, a fluid being added.

7. Fertilizer grains according to claim 6, wherein the fluid contains nutrients, e.g. liquid fertilizer, phosphorus, potassium, magnesium or micronutrients such as copper for example.

## Revendications

1. Engrais pour des plantes supérieures, qui est présent sous forme de grains, l'engrais contenant au moins 50 % en poids de germes de malt tel qu'ils sont produits lors du processus de maltage de céréales de brasserie et détachés du grain de malt, l'engrais étant formé de préférence pour l'essentiel par de tels germes de malt, **caractérisé par le fait que** les grains contiennent par tonne au moins 10 g de spores mycrohiziennes, de préférence au moins 25 g de spores mycorhiziennes et/ou au moins 5 % en poids dé mycélium, de préférence au moins 15 % en poids de mycélium d'au moins une espèce de champignon mycorhizien.

2. Engrais selon la revendication 1, **caractérisé par le fait que** les grains présentent en moyenne un diamètre de grain compris entre 2 et 8 mm, en particulier entre 3 et 5 mm.

3. Engrais selon la revendication 1, **caractérisé par le fait qu'**il présente des hydrates de carbone qui, de préférence, font au moins 3 % en poids, en particulier que les hydrates de carbone contenus sont de l'amidon et/ou du sucre.

4. Engrais selon la revendication 3, **caractérisé par le fait que** l'hydrate de carbone contenu dans l'engrais est du maltose.

5. Engrais selon la revendication 1, **caractérisé par le fait qu'**il contient en outre des poussières d'orge et/ou de malt telles qu'elles sont produites en particulier lors du processus de maltage, de préférence le rapport de germes de malt aux poussières étant compris entre 2/3 et 3/4 à 1/4

6. Procédé de fabrication d'un engrais selon la revendication 1, **caractérisé par le fait qu'**une granulation ou bien une pelletisation est effectuée pour produire les grains, un liquide étant ajouté.

7. Procédé de fabrication d'un engrais selon la revendication 6, **caractérisé par le fait que** le liquide contient des matières nutritives telles que l'engrais liquide, le phosphore, le potassium, le magnésium, ou des micro-aliments tels que le cuivre.
